# EUROPEAN PATENT SPECIFICATION

(11) **EP 3 501 984 B1**
(45) Date of publication and mention of the grant of the patent: **12.08.2020**
(21) Application number: 17209333.8
(22) Date of filing: 21.12.2017
(51) Int. Cl.: B64C 39/02, H04N 5/232, H04N 13/239

(54) **A METHOD FOR VALIDATING SENSOR UNITS IN A UAV, AND A UAV**
VERFAHREN ZUR VALIDIERUNG VON SENSOREINHEITEN IN EINER UAV SOWIE EINE UAV
PROCÉDÉ DE VALIDATION D'UNITÉS DE DÉTECTION DANS UN UAV ET UAV

(43) Date of publication of application: 26.06.2019
(73) Proprietor: Everdrone AB, 423 73 Säve (SE)
(72) Inventor: Drejak, Maciek, 426 68 Västra Frölunda (SE)
(74) Representative: AWA Sweden AB

(56) References cited:
- WO-A1-2016/187757
- Anonymous: "SENTERA QUAD SENSOR", , 16 June 2017 (2017-06-16), XP055481510, Retrieved from the Internet: URL:https://sentera.com/wp-content/uploads /2017/06/Gen2QuadSensor_Lit4062C_WEB.pdf [retrieved on 2018-06-06]

## Description

### FIELD OF THE INVENTION

The present invention relates to a method for validating sensor units in a UAV. It also relates to a UAV comprising a first sensor unit and a second sensor unit, as well as use of such sensor units to carry out the validation.

### BACKGROUND OF THE INVENTION

Unmanned aerial vehicles (UAV), also known as drones, are aircrafts without a human pilot aboard the vehicle. There are several different types and sizes of UAVs, and they may be used in a number of different application areas. For example, UAVs may be used to deliver different types of goods, such as products that have been purchased online or medical equipment, e.g. defibrillators, to the scene of an accident. Other areas of use are also possible, such as surveillance and photography.

When using UAVs, especially in urban environments, safety is essential. If the UAV would crash or fail in navigating correctly over a crowded area, both property and humans may be endangered. Therefore, it is crucial that the UAVs do not fail during flight. UAVs typically comprise a number of different sensors to ensure a safe flight and to navigate. One way of minimising the risk of the UAV failing during flight is to validate that the sensors work properly, before initiating a mission. There is therefore a need for an easy and quick way of performing such a validation.

WO2016187757 A1 discloses systems, methods, and devices for controlling a movable object using multiple sensors. In one aspect, a method for calibrating one or more extrinsic parameters of a movable object is provided. The method can comprise: receiving initial values for the one or more extrinsic parameters, wherein the one or more extrinsic parameters comprise spatial relationships between at least two image sensors carried by the movable object; receiving inertial data from at least one inertial sensor carried by the movable object during the operation of the movable object; receiving image data from the at least two image sensors carried by the movable object during the operation of the movable object; and determining estimated values for the one or more extrinsic parameters based on the initial values, the inertial data, and the image data using an iterative optimization algorithm during the operation of the movable object.

Anonymous, "SENTERA QUAD SENSOR", (20170616), URL: https://sentera. com/wp-content/uploads/2017/06/Gen2QuadSensor_Lit4062C_WEB.pdf, (20180606), XP055481510 discloses a multispectral four-imager sensor with red edge capabilities.

### SUMMARY OF THE INVENTION

It is an object of the present invention to provide a method for validating the sensor units of a UAV which is easy to perform, and which may be used to determine if it is safe to fly the UAV. This and other objects, which will become apparent in the following, are accomplished by a method for validating sensor units in a UAV, a UAV comprising a first sensor unit and a second sensor unit, and use of a first sensor unit and a second sensor unit comprised by a UAV, as defined in the accompanying independent claims.

The term exemplary should in this application be understood as serving as an example, instance or illustration.

The present invention is at least partly based on the realisation that by comparing images acquired by two different sensors or sensor units, which images at least partly overlap, it may be determined that at least one of the sensors or sensor units is dysfunctional if the overlapping portions of the images do not correlate to each other. It is then possible to determine that the UAV is not safe to fly, based on at least one of the sensors or sensor units being dysfunctional.

According to a first aspect of the present invention, a method for validating sensor units in a UAV as defined in claim 1 is provided. The UAV comprises: a first sensor unit and a second sensor unit, each sensor unit being configured to create an image of the surroundings. The method comprises the steps of:
- taking a first image by said first sensor unit,
- taking a second image by said second sensor unit, wherein said second image and said first image at least partly overlap,
- comparing the overlapping portions between the first image and the second image, and based on a result in which said overlapping portions of said first image and said second image do not correlate to each other, determine that at least one of said first sensor unit and said second sensor unit is dysfunctional.

By validating sensor units in a UAV is meant that the functionality of the sensor units is validated. In other words, it is validated if the sensor units work as intended, or if they are dysfunctional.

By sensor unit is meant a unit comprising at least one sensor. Each sensor unit may comprise only one sensor, or it may comprise two or more sensors. Thus, for embodiments in which the sensor unit only comprises one sensor, the senor unit may be referred to as a sensor. The first sensor unit and the second sensor unit may both be part of a sensor arrangement comprising a plurality of sensors. Alternatively, or additionally, the first and/or second sensor unit may correspond to a sensor arrangement comprising a plurality of sensors. The sensor(s) comprised by the first and second sensor unit may suitably be at least one of an RGB camera, an IR camera, a radar receiver or a hyperspectral camera. Other types of sensors are also conceivable and may be used as a complement to any of the above sensor types, such as ultrasound sensors.

The images created by each one of the first and second sensor units may be different types of images. For example, the images may be RGB images, 3D-images, stereo images, depth images, etc. By image is meant a data set or a data matrix, which may be presented visually. However, when comparing the first and the second images, it does not have to be a visual comparison. The comparison may be performed on the two data sets or data matrixes which constitute the first and the second images.

By "at least partly overlap" is meant that at least a portion of the data set or data matrix which constitutes the first image originates from the same physical area of the surroundings as a portion of the data set or data matrix which constitutes the second image. This way, it may be assumed that if both the first sensor unit and the second sensor unit are functioning as desired, the overlapping portions of the first image and the second image should show substantially the same image, i.e. have similar values in the data set/matrix. This is what is meant with the first and the second image correlating to each other. Stated differently, when the overlapping portions of the first and the second image do not correlate to each other, the overlapping portion of the first image does not correspond to the overlapping portion of the second image.

By correspond to and correlate to is not meant that each one of the pixels of the overlapping portions of the first image have to be identical to the pixels of the overlapping portions of the second image. When determining that at least one of said first sensor unit and said second sensor unit is dysfunctional, there may be some tolerance in the correlation. Small variations caused by e.g. a fly passing by one of the sensor units when taking one of the images may not be interpreted as a dysfunctional sensor. In order for this not to happen, "correlate to" may be interpreted as that at least 50%, or at least 60%, or at least 70%, or at least 80% of the corresponding pixels or segments in the overlapping portions of the first image and the second image respectively should correlate to each other, i.e. have similar values. By similar values is meant that the difference between the values is less than 30%, or less than 20%, or less than 10%. By segments in the overlapping portions is meant a collection of pixels, e.g. 4x4 pixels that are merged together and averaged. This may be done in order to reduce noise in the images.

Thus, for example, a first average pixel value for a first segment, being e.g. comprised of a first image matrix of 4x4 pixels in the first image, may be compared to a second average pixel value for a second segment, being e.g. comprised of a second image matrix of 4x4 pixels. If the first average pixel value is similar, or the same, as the second average pixel value, the first segment correlates, or corresponds, to the second segment (that is, e.g. by that the first average pixel value does not differ more than 10 %, or more than 20 % or more than 30 % of the second average pixel value). Hence, for at least the first segment and the second segment, the first and the second sensor units give similar, or corresponding, results. The procedure of comparing the first image with the second image continues with comparing other pixels, or other segments in a similar manner, until correlation of the overlapping portions can be established, or until a non correlation of the overlapping portions can be established. That is, until at least 50%, or at least 60%, or at least 70%, or at least 80% of the corresponding pixels or segments in the overlapping portions of the first image and the second image correlate to each other.

According to at least one example embodiment, the boundaries for the overlapping portions of the first image and the second image are determined by comparing marks, such as landmarks or other significant reference marks in the first and second images. Hereby, a relatively straightforward way to determine the overlapping portions is provided. Subsequently, the pixels or segments of the first and the second image of the determined overlapping portions can be compared as discussed above.

According to at least one example embodiment, the step of comparing the overlapping portions between the first image or the second image is carried out by e.g. comparing histograms (i.e. comparing colours or light of different segments or sub-portions of the images), template matching (i.e. comparing image parts such as e.g. segments or pixels), or feature matching (i.e. extracting a set number of features from one image, and searching for the same features in the compared image). Other methodologies of image comparison know to the skilled person can be used, or be combined with those already described.

The comparison between the first image and the second image may in some embodiments be performed by a control unit comprised by the UAV. In other embodiments, the images may be wirelessly sent to an external control unit, which may perform the comparison.

According to the first aspect of the present invention, in an airborne state, said first sensor unit is in a first position, and wherein the first image is taken in said first position. The method further comprises arranging said UAV such that said second sensor unit is positioned in said first position, wherein the second image is taken when said second sensor unit is in said first position. The advantage of this is that by taking both the first image and the second image when said first sensor unit and said second sensor unit respectively are in said first position, the images do not need to be processed by e.g. angle correction before they are compared. Further, the area of the overlapping portions of the first image and the second image may be larger if the images are taken from the same position, which increases the chance of correctly determining if any one of the sensor units is dysfunctional. The step of arranging the UAV such that the second sensor unit is positioned in said first position may for example comprise rotating the UAV, translating the UAV horizontally and/or translating the UAV vertically.

It should be noted that when arranging said second sensor unit to be positioned in said first position, an exact reproduction of the first position in which the first sensor unit took the first image is not needed. In fact, the UAV will typically vibrate, and may be somewhat tilted between the steps of taking the first image by the first sensor unit in said first position and taking the second image by the second sensor unit in said first position. For example, the first position may be referred to as a first set position indicating that the UAV is set to arrange the UAV in said first position, i.e. the same set position when taking the first image by the first sensor unit and taking the second image by the second sensor unit. The first position when taking the first image by the first sensor unit and the first position when taking the second image by the second sensor unit may for example vary in each of, or one of, the x, y and z-directions in a three-dimensional Cartesian coordinate system by 0 m - 0.5 m, e.g. 0 m - 0.2 m.

According to at least one exemplary embodiment of the first aspect of the present invention, the method further comprises a step of processing at least one of said first image and said second image before comparing the overlapping portions. This processing may for example comprise angle correction, which may be necessary e.g. if the first image and the second image are not taken from the same position of the respective sensor units, or if the UAV is tilted differently when taking the first and the second images. If two unprocessed images are compared, which images are taken from a first position of the first sensor unit, and from a second position of the second sensor unit, the images may not correlate although the sensor units may be functional. Therefore, it may be advantageous to perform some type of processing, i.e. image processing or processing of the data, before comparing the first image and the second image. Other types of processing may for example include noise reduction, e.g. by averaging and merging pixels as described above, or any other type of noise reduction.

According to at least one exemplary embodiment of the first aspect of the present invention, the UAV further comprises a third sensor unit. The method further comprises:
- taking a third image by said third sensor unit, wherein said third image at least partly overlaps with the overlapping portions of said first image and said second image,
- performing said comparison also with said third image, and based on a result in which two of said overlapping portions of said first image, said second image and said third image correlate to each other but the third does not correlate to the other two, determine which one of said sensor units that is dysfunctional.

The third sensor unit may have any of the features described in relation to the first sensor unit and the second sensor unit. The third image may accordingly have the same features as described in relation to the first image and the second image. When comparing the first image, the second image, and the third image, it may be determined that at least one of the sensor units is dysfunctional. If for example the overlapping portions of the first image and the second image correlates to each other, but the third image does not correlate to the other two, it may be determined that the third sensor unit is dysfunctional. If however none of the overlapping portions of the first image, the second image and the third image correlates to one of the other images, it may be determined that at least two of the sensor units are dysfunctional, but not which two.

The advantage of having a third sensor unit and performing the comparison also with a third image is that it may be determined which one of the sensor units is dysfunctional, instead of only determining that one of them is dysfunctional. This may simplify the process of repairing the UAV.

According to at least one exemplary embodiment of the first aspect of the present invention, said first sensor unit and said second sensor unit are angularly offset in relation to each other. This may be beneficial to ensure that the UAV can navigate properly in all directions around the circumferential extension of the UAV.

According to at least one exemplary embodiment of the first aspect of the present invention, the method further comprises a step of directly landing the UAV when at least one of said first sensor unit and said second sensor unit is determined to be dysfunctional. By directly landing is meant that the UAV does not perform the flight that was originally planned for it, but lands as soon as safely possible. This is advantageous since performing the originally planned flight with at least one dysfunctional sensor may cause the UAV to fail to perform a safe flight, which may endanger the surrounding environment or damage the UAV.

According to at least one exemplary embodiment of the first aspect of the present invention, the method further comprises a step of launching the UAV to an airborne state, wherein the UAV is hovering when performing the steps of taking said first image and taking said second image. By hovering is meant that in a three-dimensional Cartesian coordinate system, the coordinates of the UAV do not change significantly while performing the steps of taking said first image and taking said second image. Particularly the Z-coordinate, corresponding to the height above the ground, does not change significantly during these steps. This is beneficial since it may be easier to obtain two images with overlapping portions if the UAV is not moving while the images are being taken. It should be understood that the UAV may still move between the steps of taking the first image and taking the second image.

According to at least one exemplary embodiment of the first aspect of the present invention, said first sensor unit and said second sensor unit each comprises at least two sensors. The at least two sensors may be physically separated or be part of two sensor subunits, or they may be arranged on the same physical component. The at least two sensors may in some embodiments be used to create an image having depth information, such as e.g. a stereo image or a 3D image. In such an embodiment, the stereo image or 3D image may be used for the comparison, or the images from the at least two sensors may be compared separately. An advantage of each one of the sensor units comprising at least two sensors is that stereo images or 3D images may be created, using e.g. two RGB cameras or two IR cameras, possibly with an IR projector.

According to at least one exemplary embodiment of the first aspect of the present invention, any one of said two sensors is one of: an RGB camera, an IR camera, a radar receiver or a hyperspectral camera. Other types of sensors are also conceivable and may be used as a complement to any of the above sensor types, such as ultrasound sensors. These sensor types are beneficial since they are able to produce images of the surroundings of the UAV, which is useful for navigating the UAV.

According to a second aspect of the present invention, a UAV as defined in claim 9 is provided. The UAV comprises:
a first sensor unit and a second sensor unit, each sensor unit being configured to create an image of the surroundings,
a control unit configured to:
   - instruct the first sensor unit to take a first image,
   - instruct the second sensor unit to take a second image, wherein said second image and said first image at least partly overlap,
   - compare the overlapping portions between the first image and the second image, and based on a result in which said overlapping portions of said first image and said second image do not correlate to each other, determine that at least one of said first sensor unit and said second sensor unit is dysfunctional.

The instructions may be sent to the first sensor unit and the second sensor unit wirelessly, or the first sensor unit and the second sensor unit may be wired to the control unit.

Effects and features of this second aspect of the present invention are largely analogous to those described above in connection with the first aspect of the inventive concept. Embodiments mentioned in relation to the first aspect of the present invention are largely compatible with the second aspect of the invention, of which some embodiments are explicitly mentioned in the following. In other words, a method for validating sensor units in a UAV as described with any of the embodiments of the first aspect of the invention is applicable to, or may make use of, the UAV described in relation to the second aspect of the invention.

According to at least one exemplary embodiment of the second aspect of the present invention, the UAV further comprises a third sensor unit, and wherein the control unit is further configured to:
- instruct the third sensor unit to take a third image, wherein said third image at least partly overlaps with the overlapping portions of said first image and said second image,
- perform said comparison also with said third image, and based on a result in which two of said overlapping portions of said first image, said second image and said third image correlate to each other but the third does not correlate to the other two, determine which one of said sensor units is dysfunctional.

As previously described, an advantage of having a third sensor unit and performing the comparison also with a third image is that it may be determined which one of the sensor units is dysfunctional, instead of only determining that one of them is dysfunctional.

According to at least one exemplary embodiment of the second aspect of the present invention, said first sensor unit and said second sensor unit are angularly offset in relation to each other. As previously described, this may be beneficial to ensure that the UAV can perform a safe flight by navigating properly and detecting and avoiding objects approaching the UAV from any direction.

According to at least one exemplary embodiment of the second aspect of the present invention, said control unit is further configured to instruct the UAV to launch to an airborne state, and to hover while taking the first image and while taking the second image. This is beneficial since it may be easier to obtain two images with overlapping portions if the UAV is not moving while the images are being taken. It should be understood that the UAV may still move between the steps of taking the first image and taking the second image, as previously described.
According to a third aspect of the present invention, use of a first sensor unit and a second sensor unit comprised by a UAV, to carry out validation of said sensor units, is provided as defined in claim 13. This is done by
- taking a first image by said first sensor unit,
- taking a second image by said second sensor unit, wherein said second image and said first image at least partly overlap,
- comparing the overlapping portions between the first image and the second image, and based on a result in which said overlapping portions of said first image and said second image do not correlate to each other, determine that at least one of said first sensor unit and said second sensor unit is dysfunctional.

Effects and features of this third aspect of the present invention are largely analogous to those described above in connection with the first and second aspects of the inventive concept. Embodiments mentioned in relation to the first and second aspects of the present invention are largely compatible with the third aspect of the invention.

### BRIEF DESCRIPTION OF THE DRAWINGS

These and other features and advantages of the present invention will in the following be further clarified and described in more detail, with reference to the appended drawings showing exemplary embodiments of the present invention.
Fig.1 a is a perspective view showing an exemplary embodiment of a UAV according to the present invention.
Fig. 1b is a perspective view showing an exemplary embodiment of a sensor unit comprised by the UAV illustrated in Fig. 1a.
Fig. 2a-e is a schematic illustration of an exemplary embodiment of a method for validating sensor units in a UAV according to the present invention.
Fig. 3 is a flow chart of an exemplary embodiment of a method for validating sensor units in a UAV according to the present invention.

### DETAILED DESCRIPTION OF EMBODIMENTS

In the following detailed description, some embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

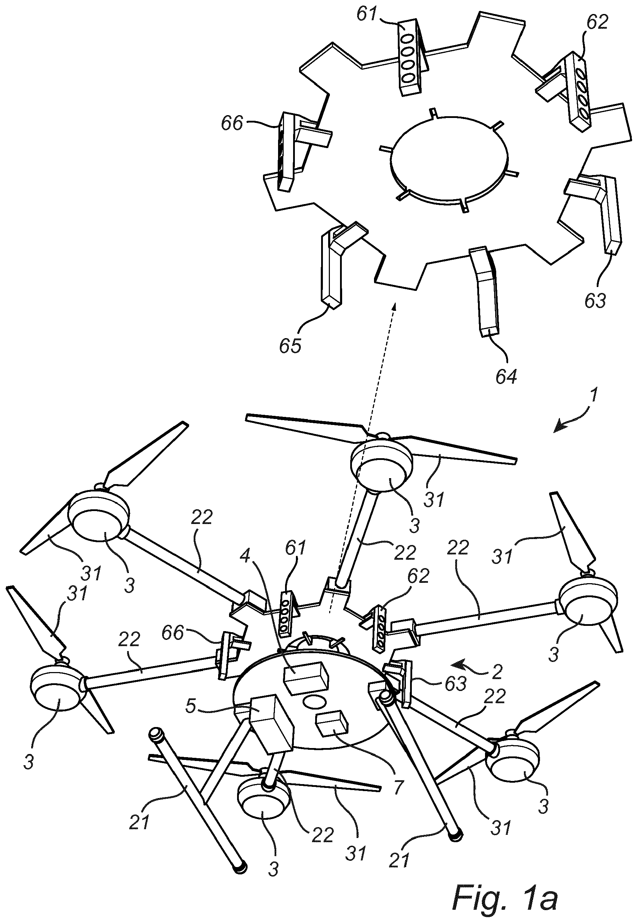

Fig. 1a illustrates a perspective view of an exemplary embodiment of a UAV according to the second aspect of the present invention. The illustrated UAV 1 may be used to perform a method according to the first aspect of the present invention.

The UAV 1 comprises a body 2 having two leg portions 21. The body 2 is adapted to carry all of the other components comprised by the UAV 1, and the leg portions 21 are adapted to support the UAV 1 when it is not being airborne. The UAV 1 further comprises six actuators 3 arranged on six arm portions 22 extending from the body 2. The actuators 3 are connected to six propellers 31. The actuators 3 may suitably be electrical engines or combustion engines. By controlling the actuators 3, the rotation of the propellers 31 and hence the movement of the UAV 1 may be controlled. This is preferably done by a control unit 4. The control unit 4 may be connected to the actuators 3 wirelessly, or they may be wired. The control unit 4 will be further described below.

The actuators 3 and the control unit 4 are powered by a power supply unit 5, which may suitably be some type of battery, e.g. a lithium-polymer battery, or an electrical generator of some type. The power supply unit 5 may comprise a plurality of subunits, e.g. a plurality of batteries. The size and capacity of the power supply unit 5 may be adapted to the size/weight of the UAV 1, the size/weight of potential goods that the UAV 1 is to carry, and the length of the flights that the UAV 1 is intended to perform. In some embodiments, the power supply unit may not be a part of the UAV, but the UAV may be connected to an external power supply unit, e.g. by wiring the UAV to the mains electricity.

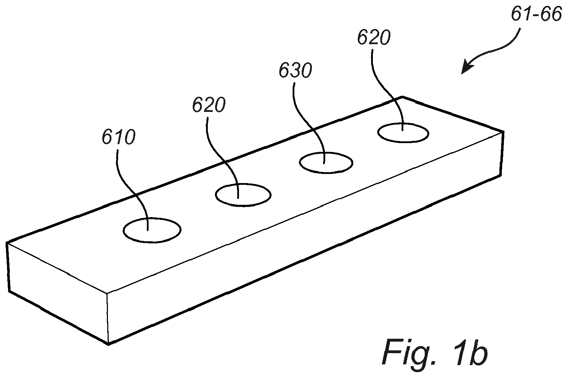

The UAV 1 further comprises a first sensor unit 61 and a second sensor unit 62 which is angularly offset in relation to each other. In this exemplary embodiment, the UAV 1 further comprises a third sensor unit 63, a fourth sensor unit 64, a fifth sensor unit 65, and a sixth sensor unit 66 angularly offset in relation to each other. Each one of the sensor units is configured to create an image of the surroundings. All of the sensor units are mounted circumferentially of the UAV, angularly offset in relation to each other. In some embodiments, a seventh sensor unit may be mounted at the centre of the UAV, facing downwards. Although only the first sensor unit 61, the second sensor unit 62 and the third sensor unit 63 are described in the following detailed description, any features and method steps described in relation to the first, second and third sensor units 61, 62, 63 may also be applied to the fourth, fifth and sixth sensor units 64, 65, 66. The sensor units 61-66 will be further described in relation to Fig. 1b.

The UAV 1 further comprises a control unit 4. The control unit 4 may for example be manifested as a general-purpose processor, an application specific processor, a circuit containing processing components, a group of distributed processing components, a group of distributed computers configured for processing, a field programmable gate array (FPGA), etc. The control unit 4 may further include a microprocessor, microcontroller, programmable digital signal processor or another programmable device. The control unit 4 may also, or instead, include an application specific integrated circuit, a programmable gate array or programmable array logic, a programmable logic device, or a digital signal processor. Where the control unit 4 includes a programmable device such as the microprocessor, microcontroller or programmable digital signal processor mentioned above, the processor may further include computer executable code that controls operation of the programmable device.

The UAV 1 according to the illustrated exemplary embodiment further comprises a GPS module 7, for navigation of the UAV 1. Other embodiments may not comprise a GPS module, or may comprise a GPS module but may not use it for navigation. In this exemplary embodiment however, correspondingly to the control unit 4, the GPS module 7 may for example include a GPS receiver, a microprocessor, microcontroller, programmable digital signal processor or another programmable device. The GPS module 7 may also, or instead, include an application specific integrated circuit, a programmable gate array or programmable array logic, a programmable logic device, or a digital signal processor arranged and configured for digital communication with the control unit 4. Where the control unit 4 includes a programmable device such as the microprocessor, microcontroller or programmable digital signal processor mentioned above, the GPS module 7 may simply comprise a GPS receiver and circuits for digital communication with the control unit 4.

The processor (of the control unit 4 and/or the GPS module 7) may be or include any number of hardware components for conducting data or signal processing or for executing computer code stored in memory. The memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection) and includes computer code for executing one or more processes described herein.

The control unit 4 is connected to the various described features of the UAV 1, such as e.g. the GPS module 7, the sensor units 61-66 and the actuators 3, and is configured to control system parameters. Moreover, the control unit 4 may be embodied by one or more control units, where each control unit may be either a general purpose control unit or a dedicated control unit for performing a specific function.

The present disclosure contemplates methods, devices and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor.

By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data that cause a general-purpose computer, special purpose computer, or special purpose processing machines to perform a certain function or group of functions.

It should be understood that the control unit 4 may comprise a digital signal processor arranged and configured for digital communication with an off-site server or cloud based server. Thus data may be sent to and from the control unit 4.

Fig. 1b illustrates a perspective view of an exemplary sensor unit 61-66 comprised by the UAV 1 illustrated in Fig. 1a. This exemplary sensor unit 61 - 66 comprises two different types of sensors: an RGB camera 610 and two IR cameras 620. It further comprises an IR laser projector 630. By combining two images obtained by the two IR cameras 620 it is possible to extract depth information from the image, i.e. to create a depth image. The IR laser projector 630 may be used to further illuminate the scene in order to enable extraction of depth information in any lighting condition and surface textures. The depth image may if desired be combined with an RGB image acquired by the RGB camera 610, to create a stereo image or a 3D image. When performing the comparison of a first and a second image according to the present invention, using the described exemplary sensor units 61-66, this may include comparing a first and a second depth image, a first and a second IR image, a first and a second RGB image, a first and a second 3D image and/or a first and a second stereo image.

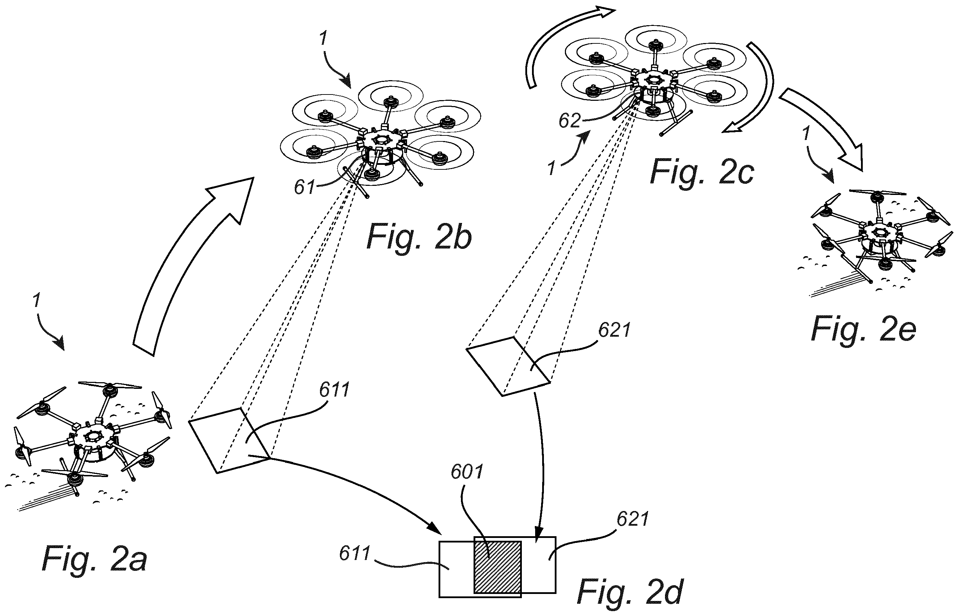

In Fig. 2a-e, an exemplary embodiment of a method for validating sensor units 61-66 in a UAV 1 according to the present invention is schematically illustrated. In this embodiment, the UAV 1 starts from the ground in Fig. 2a. When receiving instructions to perform a validation, the UAV 1 is launched to an airborne state illustrated in Fig. 2b. This is achieved by the control unit 4 instructing to UAV 1, i.e. the actuators 3, such that the propellers 31 are activated and the UAV 1 is launched. The UAV 1 is launched to an airborne state, and at a desired height it is instructed by the control unit 4 to hover. While hovering, a first image 611 is taken by said first sensor unit 61 in a first position, as illustrated in Fig. 2b. This is also controlled by the control unit 4. After taking the first image 611, the UAV is arranged such that the second sensor unit 62 is positioned in the first position, see Fig. 2c. In this exemplary embodiment, this is done by rotating the UAV 1. When the second sensor unit 62 is positioned in the first position, the UAV 1 once again hovers, and a second image 621 is taken by said second sensor unit 62. Since the first sensor unit 61 and the second sensor unit 62 were both in the first position while taking the first image 611 and the second image 621, the second image 621 and the first image 611 will at least partly overlap, as is illustrated in Fig. 2d. Using the control unit 4, the overlapping portions 601 between the first image 611 and the second image 621 are compared. If the comparison shows a result in which the overlapping portions 601 of the first image 611 and the second image 621 do not correlate to each other, it is determined that at least one of the first sensor unit 61 and the second sensor unit 62 is dysfunctional. In this exemplary embodiment, the UAV 1 is instructed by the control unit 4 to directly land, see Fig. 2e, if at least one of the first sensor unit 61 and the second sensor unit 62 is determined to be dysfunctional. If it is determined that both the first sensor unit 61 and the second sensor unit 62 are functional, the UAV 1 may not be instructed to land, but may instead perform an intended flight.

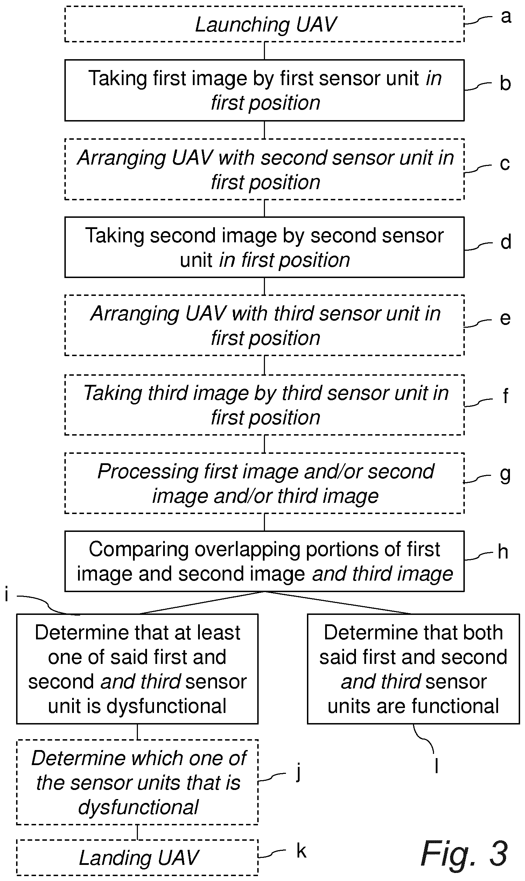

Fig. 3 shows a flow chart of an exemplary embodiment of a method for validating sensor units in a UAV according to the present invention. The steps of the method that are described in italics and surrounded by a dashed frame are optional, i.e. steps a, c, e, f, g, j, k. The portions of steps b, d, h, I and I that are written in italics are also optional. The method will now be described in more detail, including all of the steps a-I.

The process may be initiated by the UAV receiving instructions to perform a validation of the sensor units. These instructions may be given directly, or the control unit may for example be programmed to perform a validation every time the UAV is instructed to initiate a flight. The process may then start with step a, wherein the UAV is launched to an airborne state, similar to what is described in relation to Fig. 2a-2b. Once launched, the UAV may be instructed to hover while taking a first image by the first sensor unit, i.e. during step b. In some embodiments, this may be done with the sensor unit arranged in a first position. In an optional step which may be included in some exemplary embodiments, step c, the UAV is then arranged so that the second sensor unit is in the first position. This may be done as in Fig. 2c, i.e. by rotating the UAV. In other embodiments, it may be achieved by translating the UAV horizontally and/or vertically, depending on how the sensor units are arranged. Following step b or c, a second image is taken by the second sensor unit in step d, such that the second image at least partly overlaps with the first image. If step c has been performed, the second image is taken with the second sensor unit in the first position.

After step d, three optional steps follow. In step e, the UAV may be arranged such that a third sensor unit is in the first position. This is suitably followed by a step f in which a third image is taken by the third sensor unit, in the first position, such that the third image at least partly overlaps with the overlapping portions of the first image and the second image.

All of the steps related to taking images, i.e. steps b, d and f, are suitably performed by the control unit giving instructions to the sensor units to take such images. All of the steps of arranging the UAV are suitably performed by the control unit giving instructions to the actuators which control the propellers of the UAV.

After the first image, the second image, and optionally the third image have been taken, the process may include a step g of processing any one(s) of, or all of the images. The processing step may include any suitable type of image or data processing. This is followed by the step h of comparing the overlapping portions of the first image, the second image and optionally the third image. The comparison is suitably performed by the control unit. Based on a result from the comparison in which the overlapping portions of the first image, the second image and optionally the third image do not correlate to each other, in step i it may be determined that at least one of the sensor units is dysfunctional. If the process includes step f of taking a third image, step i may be followed by a step j of determining which one of the sensor units that is dysfunctional. This may be desired to simplify the process of repairing the UAV.

In some embodiments, the UAV may be instructed by the control unit to land, in step j, if it is determined that at least one of the sensor units is dysfunctional. If instead it is determined in step I that both the first sensor unit and the second sensor unit, and optionally the third sensor unit, are functional, the UAV may be allowed to continue to fly.

Although Fig. 2a-e and Fig. 3 may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps. Additionally, even though the disclosure has been described with reference to specific exemplifying embodiments thereof, many different alterations, modifications and the like will become apparent for those skilled in the art.

The person skilled in the art realizes that the present invention by no means is limited to the embodiments described above. The features of the described embodiments may be combined in different ways, and many modifications and variations are possible within the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. A method for validating sensor units in a UAV, said UAV comprising:
a first sensor unit and a second sensor unit, each sensor unit being configured to create an image of the surroundings,
said method comprising the steps of:
- taking a first image by said first sensor unit,
- taking a second image by said second sensor unit, wherein said second image and said first image at least partly overlap,
- comparing the overlapping portions between the first image and the second image,
**characterized in that**
based on a result in which said overlapping portions of said first image and said second image do not correlate to each other, determine that at least one of said first sensor unit and said second sensor unit is dysfunctional,
wherein in an airborne state, said first sensor unit is in a first position, and wherein the first image is taken in said first position,
said method further comprises:
- arranging said UAV such that said second sensor unit is positioned in said first position, wherein the second image is taken when said second sensor unit is in said first position.

2. A method according to claim 1, further comprising a step of processing at least one of said first image and said second image before comparing the overlapping portions.

3. A method according to any one of the preceding claims, wherein the UAV further comprises a third sensor unit, said method further comprising:
- taking a third image by said third sensor unit, wherein said third image at least partly overlaps with the overlapping portions of said first image and said second image,
- performing said comparison also with said third image, and based on a result in which two of said overlapping portions of said first image, said second image and said third image correlate to each other but the third does not correlate to the other two , determine which one of said sensor units that is dysfunctional.

4. A method according to any one of the preceding claims, wherein said first sensor unit and said second sensor unit are angularly offset in relation to each other.

5. A method according to any one of the preceding claims, further comprising a step of directly landing the UAV when at least one of said first sensor unit and said second sensor unit is determined to be dysfunctional.

6. A method according to any one of the preceding claims, further comprising a step of launching the UAV to an airborne state, wherein the UAV is hovering when performing the steps of taking said first image and taking said second image.

7. A method according to any one of the preceding claims, wherein said first sensor unit and said second sensor unit each comprises at least two sensors.

8. A method according to claim 7, wherein any one of said two sensors is one of: an RGB camera, an IR camera, a radar receiver or a hyperspectral camera.

9. A UAV, comprising:
a first sensor unit and a second sensor unit, each sensor unit being configured to create an image of the surroundings,
a control unit configured to:
- instruct the first sensor unit to take a first image,
- instruct the second sensor unit to take a second image, wherein said second image and said first image at least partly overlap,
- compare the overlapping portions between the first image and the second image,
**characterized in that**
based on a result in which said overlapping portions of said first image and said second image do not correlate to each other, determine that at least one of said first sensor unit and said second sensor unit is dysfunctional
wherein in an airborne state, said first sensor unit is in a first position, and wherein the first image is taken in said first position,
said control unit is further configured to:
arrange said UAV such that said second sensor unit is positioned in said first position, wherein the second image is taken when said second sensor unit is in said first position.

10. A UAV according to claim 9, further comprising a third sensor unit, and wherein the control unit is further configured to:
instruct the third sensor unit to take a third image, wherein said third image at least partly overlaps with the overlapping portions of said first image and said second image,
perform said comparison also with said third image, and based on a result in which two of said overlapping portions of said first image, said second image and said third image correlate to each other but the third does not correlate to the other two, determine which one of said sensor units is dysfunctional.

11. A UAV according to any one of claims 9-10, wherein said first sensor unit and said second sensor unit are angularly offset in relation to each other.

12. A UAV according to any one of claims 9-11, wherein said control unit is further configured to instruct the UAV to launch to an airborne state, and to hover while taking the first image and while taking the second image.

13. Use of a first sensor unit and a second sensor unit comprised by a UAV, to carry out validation of said sensor units, by
- taking a first image by said first sensor unit,
- taking a second image by said second sensor unit, wherein said second image and said first image at least partly overlap,
- comparing the overlapping portions between the first image and the second image,
**characterized in that** based on a result in which said overlapping portions of said first image and said second image do not correlate to each other, determine that at least one of said first sensor unit and said second sensor unit is dysfunctional, wherein in an airborne state, said first sensor unit is in a first position, and wherein the first image is taken in said first position, and
- arranging said UAV such that said second sensor unit is positioned in said first position, wherein the second image is taken when said second sensor unit is in said first position.

## Patentansprüche

1. Verfahren zum Validieren von Sensoreinheiten in einem UAV, wobei das UAV umfasst:
eine erste Sensoreinheit und eine zweite Sensoreinheit, wobei jede Sensoreinheit konfiguriert ist, um ein Bild der Umgebung zu erzeugen,
wobei das Verfahren die Schritte umfasst:
- Aufnehmen eines ersten Bildes durch die erste Sensoreinheit,
- Aufnehmen eines zweiten Bildes von der zweiten Sensoreinheit, wobei sich das zweite Bild und das erste Bild zumindest teilweise überlappen,
- Vergleichen der überlappenden Abschnitte zwischen dem ersten Bild und dem zweiten Bild,
**dadurch gekennzeichnet, dass**
basierend auf einem Ergebnis, bei dem die überlappenden Abschnitte des ersten Bildes und des zweiten Bildes nicht miteinander korrelieren,
Feststellen, dass mindestens eine der ersten Sensoreinheit und der zweiten Sensoreinheit nicht funktioniert,
wobei, wenn sich das UAV in der Luft befindet, sich die erste Sensoreinheit in einer ersten Position befindet und wobei das erste Bild in der ersten Position aufgenommen wird,
das Verfahren umfasst ferner:
- Anordnen des UAV so, dass die zweite Sensoreinheit in der ersten Position positioniert ist, wobei das zweite Bild aufgenommen wird, wenn sich die zweite Sensoreinheit in der ersten Position befindet.

2. Verfahren nach Anspruch 1, ferner umfassend einen Verarbeitungsschritt eines mindestens eines des ersten Bildes und des zweiten Bildes vor dem Vergleichen der überlappenden Teile.

3. Verfahren nach einem der vorhergehenden Ansprüche, wobei das UAV ferner eine dritte Sensoreinheit umfasst, wobei das Verfahren ferner umfasst:
- Aufnehmen eines dritten Bildes durch die dritte Sensoreinheit, wobei sich das dritte Bild zumindest teilweise mit den überlappenden Abschnitten des ersten Bildes und des zweiten Bildes, überlappt,
- Durchführen des Vergleichs auch mit dem dritten Bild, und basierend auf einem Ergebnis, bei dem zwei der überlappenden Abschnitte des ersten Bildes, des zweiten Bildes und des dritten Bildes miteinander korrelieren, aber das dritte Bild nicht mit den anderen zwei korreliert, Bestimmen welcher der Sensoreinheiten nicht funktioniert.

4. Verfahren nach einem der vorhergehenden Ansprüche, wobei die erste Sensoreinheit und die zweite Sensoreinheit in Bezug zueinander winkelversetzt sind.

5. Verfahren nach einem der vorhergehenden Ansprüche, ferner umfassend einen direkten Landeschritt des UAV, wenn festgestellt wird, dass mindestens eine der ersten Sensoreinheit und der zweiten Sensoreinheit nicht funktioniert.

6. Verfahren nach einem der vorhergehenden Ansprüche, ferner umfassend einen Schritt zum Starten des UAV in die Luft, wobei das UAV schwebt, wenn die Schritte des Aufnehmens des ersten Bildes und des Aufnehmens des zweiten Bildes ausgeführt werden.

7. Verfahren nach einem der vorhergehenden Ansprüche, wobei die erste Sensoreinheit und die zweite Sensoreinheit jeweils mindestens zwei Sensoren umfassen.

8. Verfahren nach Anspruch 8, wobei einer der beiden Sensoren einer von: einer RGB-Kamera, einer IR-Kamera, einem Radarempfänger oder einer Hyperspektralkamera ist.

9. UAV, umfassend:
eine erste Sensoreinheit und eine zweite Sensoreinheit, wobei jede Sensoreinheit konfiguriert ist, um ein Bild der Umgebung zu erzeugen,
eine Steuereinheit, die konfiguriert ist, um:
- die erste Sensoreinheit anzuweisen, ein erstes Bild aufzunehmen,
- die zweite Sensoreinheit anzuweisen ein zweites Bild aufzunehmen, wobei sich das zweite Bild und das erste Bild zumindest teilweise überlappen,
- die überlappenden Teile zwischen dem ersten Bild und dem zweiten Bild zu vergleichen,
**dadurch gekennzeichnet, dass**
basierend auf einem Ergebnis, bei dem die überlappenden Abschnitte des ersten Bildes und des zweiten Bildes nicht miteinander korrelieren,
Feststellen, dass mindestens eine der ersten Sensoreinheit und der zweiten Sensoreinheit nicht funktioniert,
wobei, wenn sich das UAV in der Luft befindet, sich die erste Sensoreinheit in einer ersten Position befindet und wobei das erste Bild in der ersten Position aufgenommen wird,
die Steuereinheit ist ferner konfiguriert um:
- das UAV so anzuordnen, dass die zweite Sensoreinheit in der ersten Position positioniert ist, wobei das zweite Bild aufgenommen wird, wenn sich die zweite Sensoreinheit in der ersten Position befindet.

10. UAV nach Anspruch 9, ferner umfassend eine dritte Sensoreinheit, und wobei die Steuereinheit ferner konfiguriert ist, um:
- ein drittes Bild durch die dritte Sensoreinheit aufzunehmen, wobei sich das dritte Bild zumindest teilweise mit den überlappenden Abschnitten des ersten Bildes und des zweiten Bildes, überlappt,
- den Vergleich auch mit dem dritten Bild durchzuführen, und basierend auf einem Ergebnis, bei dem zwei der überlappenden Abschnitte des ersten Bildes, des zweiten Bildes und des dritten Bildes miteinander korrelieren, aber das dritte Bild nicht mit den anderen zwei korreliert, Bestimmen welcher der Sensoreinheiten nicht funktioniert.

11. UAV nach einem der Ansprüche 9 bis 10, wobei die erste Sensoreinheit und die zweite Sensoreinheit in Bezug zueinander winkelversetzt sind.

12. UAV nach einem der Ansprüche 9 bis 11, wobei die Steuereinheit ferner konfiguriert ist, um das UAV anzuweisen, in die Luft zu starten und, während das erste Bild aufgenommen wird und während das zweite Bild aufgenommen wird, zu schweben.

13. Verwendung einer von einem UAV umfassten ersten Sensoreinheit und einer von einem UAV umfassten zweiten Sensoreinheit, um eine Validierung der Sensoreinheiten durchzuführen, indem
- ein erstes Bild von der ersten Sensoreinheit aufgenommen wird,
- ein zweites Bild von der zweiten Sensoreinheit aufgenommen wird, wobei das zweite Bild und das erste Bild zumindest teilweise überlappen,
- Vergleichen der überlappenden Abschnitte zwischen dem ersten Bild und dem zweiten Bild,
**dadurch gekennzeichnet, dass**
basierend auf einem Ergebnis, bei dem die überlappenden Abschnitte des ersten Bildes und des zweiten Bildes nicht miteinander korrelieren,
Feststellen, dass mindestens eine der ersten Sensoreinheit und der zweiten Sensoreinheit nicht funktioniert, wobei, wenn sich das UAV in der Luft befindet, sich die erste Sensoreinheit in einer ersten Position befindet und wobei das erste Bild in der ersten Position aufgenommen wird, und
- Anordnen des UAV so, dass die zweite Sensoreinheit in der ersten Position positioniert ist, wobei das zweite Bild aufgenommen wird, wenn sich die zweite Sensoreinheit in der ersten Position befindet.

## Revendications

1. Procédé de validation d'unités de détection dans un drone, ledit drone comprenant :
une première unité de détection et une deuxième unité de détection, chaque unité de détection étant configurée pour créer une image des alentours,
ledit procédé comprenant les étapes de :
- prise d'une première image par ladite première unité de détection,
- prise d'une deuxième image par ladite deuxième unité de détection, ladite deuxième image et ladite première image se chevauchant au moins partiellement,
- comparaison des parties se chevauchant entre la première image et la deuxième image,
**caractérisé par**,
sur la base d'un résultat selon lequel lesdites parties se chevauchant de ladite première image et ladite deuxième image ne sont pas corrélées l'une à l'autre, la détermination qu'au moins une unité parmi ladite première unité de détection et ladite deuxième unité de détection est dysfonctionnelle,
dans lequel, dans un état en vol, ladite première unité de détection est dans une première position, et dans lequel la première image est prise dans ladite première position,
ledit procédé comprenant en outre :
- l'agencement dudit drone de telle sorte que ladite deuxième unité de détection soit positionnée dans ladite première position, la deuxième image étant prise quand ladite deuxième unité de détection est dans ladite première position.

2. Procédé selon la revendication 1, comprenant en outre une étape de traitement d'au moins une image parmi ladite première image et ladite deuxième image avant la comparaison des parties se chevauchant.

3. Procédé selon l'une quelconque des revendications précédentes, dans lequel le drone comprend en outre une troisième unité de détection, ledit procédé comprenant en outre :
- la prise d'une troisième image par ladite troisième unité de détection, ladite troisième image chevauchant au moins partiellement les parties se chevauchant de ladite première image et ladite deuxième image,
- la réalisation de ladite comparaison également avec ladite troisième image, et sur la base d'un résultat selon lequel deux desdites parties se chevauchant de ladite première image, ladite deuxième image et ladite troisième image sont corrélées l'une à l'autre, mais la troisième n'est pas corrélée aux deux autres, la détermination de celle desdites unités de détection qui est dysfonctionnelle.

4. Procédé selon l'une quelconque des revendications précédentes, dans lequel ladite première unité de détection et ladite deuxième unité de détection sont décalées angulairement l'une par rapport à l'autre.

5. Procédé selon l'une quelconque des revendications précédentes, comprenant en outre une étape d'atterrissage direct du drone quand il est déterminé qu'au moins une unité parmi ladite première unité de détection et ladite deuxième unité de détection est dysfonctionnelle.

6. Procédé selon l'une quelconque des revendications précédentes, comprenant en outre une étape de décollage du drone vers un état en vol, le drone réalisant un vol stationnaire lors de la réalisation des étapes de prise de ladite première image et prise de ladite deuxième image.

7. Procédé selon l'une quelconque des revendications précédentes, dans lequel ladite première unité de détection et ladite deuxième unité de détection comprennent chacune au moins deux détecteurs.

8. Procédé selon la revendication 7, dans lequel l'un quelconque desdits deux détecteurs en est un parmi : une caméra RVB, une caméra IR, un récepteur radar et une caméra hyperspectrale.

9. Drone, comprenant :
une première unité de détection et une deuxième unité de détection, chaque unité de détection étant configurée pour créer une image des alentours,
une unité de commande configurée pour :
- donner l'instruction à la première unité de détection de prendre une première image,
- donner l'instruction à la deuxième unité de détection de prendre une deuxième image, ladite deuxième image et ladite première image se chevauchant au moins partiellement,
- comparer les parties se chevauchant entre la première image et la deuxième image,
**caractérisé par**,
sur la base d'un résultat selon lequel lesdites parties se chevauchant de ladite première image et ladite deuxième image ne sont pas corrélées l'une à l'autre, la détermination qu'au moins une unité parmi ladite première unité de détection et ladite deuxième unité de détection est dysfonctionnelle,
dans lequel, dans un état en vol, ladite première unité de détection est dans une première position, et dans lequel la première image est prise dans ladite première position,
ladite unité de commande étant également configurée pour :
- agencer ledit drone de telle sorte que ladite deuxième unité de détection soit positionnée dans ladite première position, la deuxième image étant prise quand ladite deuxième unité de détection est dans ladite première position.

10. Drone selon la revendication 9, comprenant en outre une troisième unité de détection, et dans lequel l'unité de commande est également configurée pour :
- donner l'instruction à la troisième unité de détection de prendre une troisième image, ladite troisième image chevauchant au moins partiellement les parties se chevauchant de ladite première image et ladite deuxième image,
- réaliser ladite comparaison également avec ladite troisième image, et sur la base d'un résultat selon lequel deux desdites parties se chevauchant de ladite première image, ladite deuxième image et ladite troisième image sont corrélées l'une à l'autre, mais la troisième n'est pas corrélée aux deux autres, déterminer celle desdites unités de détection qui est dysfonctionnelle.

11. Drone selon l'une quelconque des revendications 9 et 10, dans lequel ladite première unité de détection et ladite deuxième unité de détection sont décalées angulairement l'une par rapport à l'autre.

12. Drone selon l'une quelconque des revendications 9 à 11, dans lequel ladite unité de commande est également configurée pour donner l'instruction au drone de décoller pour rejoindre un état en vol, et de réaliser un vol stationnaire pendant la prise de la première image et pendant la prise de la deuxième image.

13. Utilisation d'une première unité de détection et d'une deuxième unité de détection contenues dans un drone, pour réaliser la validation desdites unités de détection, par
- prise d'une première image par ladite première unité de détection,
- prise d'une deuxième image par ladite deuxième unité de détection, ladite deuxième image et ladite première image se chevauchant au moins partiellement,
- comparaison des parties se chevauchant entre la première image et la deuxième image,
**caractérisée par**,
sur la base d'un résultat selon lequel lesdites parties se chevauchant de ladite première image et ladite deuxième image ne sont pas corrélées l'une à l'autre, la détermination qu'au moins une unité parmi ladite première unité de détection et ladite deuxième unité de détection est dysfonctionnelle,
dans laquelle, dans un état en vol, ladite première unité de détection est dans une première position, et dans laquelle la première image est prise dans ladite première position, et
- agencement dudit drone de telle sorte que ladite deuxième unité de détection soit positionnée dans ladite première position, la deuxième image étant prise quand ladite deuxième unité de détection est dans ladite première position.
